(19) Europäisches Patentamt / European Patent Office / Office européen des brevets

(11) **EP 2 966 801 B1**

(12) **EUROPEAN PATENT SPECIFICATION**

(45) Date of publication and mention
of the grant of the patent:
**21.08.2019 Bulletin 2019/34**

(51) Int Cl.:
*H04L 9/00* *(2006.01)*    *H04L 9/32* *(2006.01)*

(21) Application number: **14176198.1**

(22) Date of filing: **08.07.2014**

(54) **CHAOTIC BASED HASH FUNCTION AND THEIR USE TO AUTHENTICATION.**

AUF CHAOS BASIERENDE HASH-FUNKTION UND IHRE VERWENDUNG FÜR AUTHENTISIERUNG

FONCTION DE HACHAGE BASÉES SUR L'UTILISATION DE SYSTÈME CHAOTIQUE ET LEUR UTILISATION POUR L'AUTHENTIFICATION

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**13.01.2016 Bulletin 2016/02**

(73) Proprietor: **Europa-Universität Viadrina Frankfurt
(Oder)
15230 Frankfurt (Oder) (DE)**

(72) Inventor: **Rocha, Luis
12159 Berlin (DE)**

(74) Representative: **Bittner, Thomas L.
Boehmert & Boehmert
Anwaltspartnerschaft mbB
Pettenkoferstrasse 22
80336 München (DE)**

(56) References cited:
**WO-A1-2011/110887**

• **Li Yantao Xiao Di Deng Shaojiang ET AL: "Secure
hash function based on chaotic tent map with
changeable parameter",**
&#9AD8;?&#x672F;&#x901A;&#x8BAF;&#xFF1A;& #x82F1;??, 1 January 2012 (2012-01-01),
pages 7-12, XP055141308, DOI:
10.3772/j.issn.1006-6748.2012.01.002 Retrieved
from the Internet:
URL:http://lib.cqvip.com/qk/85378X/201201/
41697181.html

• **Mazen Tawfik Mohammed ET AL: "Chaotic Based
Secure Hash Algorithm" In: "International
Journal of Emerging Trends & Technology in
Computer Science (IJETTCS)",** 30 April 2013
(2013-04-30), XP055141312, ISSN: 2278-6856 *
paragraph [0004] *

• **MIHAILESCU MARIUS IULIAN ED - ISLAM A K M
SADRUL ET AL: "New Enrollment Scheme for
Biometric Template Using Hash Chaos-based
Cryptography",** PROCEDIA ENGINEERING,
ELSEVIER, AMSTERDAM, NL, vol. 69, 25 March
2014 (2014-03-25), pages 1459-1468,
XP028832767, ISSN: 1877-7058, DOI:
10.1016/J.PROENG.2014.03.142

• **KANSO A ET AL: "Keyed hash function based on
a chaotic map",** INFORMATION SCIENCES,
AMSTERDAM, NL, vol. 186, no. 1, 6 September
2011 (2011-09-06), pages 249-264, XP028113977,
ISSN: 0020-0255, DOI: 10.1016/J.INS.2011.09.008
[retrieved on 2011-10-01]

• **"Chapter 10: Identification and Entity
Authentication ED - Menezes A J; Van Oorschot
P C; Vanstone S A",** HANDBOOK OF APPLIED
CRYPTOGRAPHY; [CRC PRESS SERIES ON
DISCRETE MATHEMATICES AND ITS
APPLICATIONS], CRC PRESS, BOCA RATON, FL,
US, PAGE(S) 385 - 424 , 1 October 1996
(1996-10-01), XP001525010, ISBN:
978-0-8493-8523-0 Retrieved from the Internet:
URL:http://www.cacr.math.uwaterloo.ca/hac/

• **ROCHA L: "On the rate of convergence of 2-term
recursions in Rd",** COMPUTING, SPRINGER,
VIENNA, AT, vol. 59, no. 3, 1 September 1997
(1997-09-01), pages 187-207, XP009140606, ISSN:
0010-485X, DOI: 10.1007/BF02684440

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

- "Chapter 9: ED - Menezes A J; Van Oorschot P C; Vanstone S A", HANDBOOK OF APPLIED CRYPTOGRAPHY; [CRC PRESS SERIES ON DISCRETE MATHEMATICES AND ITS APPLICATIONS], CRC PRESS, BOCA RATON, FL, US, PAGE(S) 321 - 383 , 1 October 1996 (1996-10-01), XP001525009, ISBN: 978-0-8493-8523-0 Retrieved from the Internet: URL:http://www.cacr.math.uwaterloo.ca/hac/
- SHUJUN LI: "Analyses and New Designs of Digital Chaotic Ciphers", 23 May 2009 (2009-05-23), PH. D. DISSERTATION OF XI'AN JIAOTONG UNIVERSITY, CN, PAGE(S) 207PP, XP009180207, * paragraph [0003] *
- Luis Rocha: "Über die Konvergenzordnung k-stufiger Iterationen und Nullstellenbestimmung nichtlinearer Gleichungssyteme" In: "Über die Konvergenzordnung k-stufiger Iterationen und Nullstellenbestimmung nichtlinearer Gleichungssyteme", 1 January 1993 (1993-01-01), Universität Ulm, XP055496866,

- Martin Jaggi: "Revisiting Frank-Wolfe: Projection-Free Sparse Convex Optimization", , 1 January 2013 (2013-01-01), XP055546825, Retrieved from the Internet: URL:http://m8j.net/math/revisited-FW.pdf [retrieved on 2019-01-23]

**Description**

The invention relates to a method and a system for generating an authentication value as well as a method and a system for verifying an input value.

Background

Authenticating a user via a password is common routine in everyday life, for example for checking electronic mail or transferring money electronically. There are several approaches for handling the password of the user.

In a very simple approach, the password is saved in a memory of a server. When the user shall be authenticated, the password is entered by the user and compared to the saved password. If the entered and the saved password are identical, authentication is confirmed and the user can perform further actions. If someone gains access to the server, the password can be stolen and abused.

In another scheme, the password is mapped to another entity, sometimes called an image. Mapping is done, for example, by a Hash function and only the mapped entity is stored. When a user enters his password, the entered password is mapped using the Hash function. Then, the mapped entity is compared to the stored image for authentication. By gaining access to the server, only the image of the password can be retrieved. It is assumed that Hash functions cannot be converted, but this was never proven. Hash functions are classified according to the estimated effort (in terms of computing power) to invert the Hash function and determine the password.

In recent years there are applications of one-way-functions used in different areas, for example RSA (asymmetric encryption schemes), digital signature, public key functions, probabilistic encryption, secure pseudo-random generation in order to guaranty secure encrypted transmissions, general zero-knowledge for interactive proofs, private key symmetric encryption schemes in order to secure information against adaptive chosen-cipher text attack, message authentication codes, where a cryptographic message authentication code (MAC) is a short piece of information used to authenticate a message, and digital signature schemes in order to secure information against adaptive chosen message attacks.

The problem with these applications is that for the used functions it was never demonstrated that they are really true one way functions. The paper M. Naor and M. Yung. Universal One-Way Hash Functions and their Cryptographic Applications, Proceedings of the twenty-first annual ACM symposium on Theory of computing (1989) shows that only if a real 1 to 1 one-way functions exists ($x \neq y \Leftrightarrow f(x) \neq f(y)$), then the one-way based signature scheme described in the paper is secure. For this reason, it is very probable that collisions are encountered such as for $x \neq z \Rightarrow f(x) = f(z)$ where $x$ and $z$ are plain text. This problem leads to chaos in the decoding process of information because one encrypted text is decoded on more than one form. The actual applications do not guaranty a completely secure cryptographic scheme.

Document WO 2011/110887 A1 relates to a cryptographic system and a method using a one-way function. Further, a generator for generating a class of one-way functions is disclosed. However, the so called true one-way functions are only approximately described. Indeed, only an approximation of the one-way functions is disclosed without providing an exact definition.

Document WO 98/36523 A1 discloses a cryptographic system using chaotic dynamics. Keys for the cryptographic system are generated with reference to the N-body problem. However, it is not proven that the N-body problem is a true one-way function.

Document Li Yantao et al. "Secure hash function based on chaotic tent map with changeable parameter", High technology letters volume 18, number 1, pages 7 to 12 (2012) discloses an algorithm for a hash function based on an chaotic tent map with a changeable parameter. A one dimensional and piecewise tent map with changeable parameters is chosen. A hash value is generated from the chaotic tent map.

Document M. T. Mohammed et al., "Chaotic based secure hash algorithm", International journal of emerging trends and technology in computer science, volume 2, issue 2, pages 127 - 133 (2013) discloses an algorithm for creating a chaotic hash function. The security of the hash function shall be increased. The proposed hash function has a good avalanche effect and is collision resistant. The chaotic used for building the hash function is built on a Lorenz system.

Document M. I. Mihailescu "New enrolment scheme for biometric template using has chaos-based cryptography", Procedia Engineering, volume 69, pages 1459 - 1468 (2014) discloses an enrolment scheme for a biometric template based on hash chaos based cryptography.

Document A. Kanso, et al., "Keyed hash function based on a chaotic map", Information sciences, volume 186, pages 249 - 264 (212) discloses an algorithm for providing a keyed hash function based on a single chaotic map. The hash function has a strong confusion and diffusion capability and good collision resistance.

Document WO 2011/110887 A1 discloses a cryptographic system and a method using a so called one way function.

Document XP 001525010 (chapter 10 from "Handbook of applied cryptography" by A. Menezes, et al. (1996)) discloses background information on identification and entity or sentication.

Document L. Rocha "On the rate of convergence of 2-term recursions in Rd, Computing, volume 59, pages 187 - 207 (1997) discloses an investigation of the rate of convergence of an iteration in a compact set.

Document XP001525009 (chapter 9 of the "Handbook of applied cryptography" by A. Menezes et al. (1996)) refers to hash functions and data integrity.

Document XP55496866 "Über die Konvergenzordnung k-stufiger Iterationen und Nullstellenbestimmung nichtlinearer Gleichungssysteme" from Luis Rocha discloses an investigation of the rate of convergence of an iteration on a compact set.

Document XP055546825 "Revisiting Frank-Wolfe: Projection-Free Sparse Convex Optimization" from Martin Jaggi discloses a more efficient Frank-wolfe steps by suppressing constants and logarithmic factors.

Document S. Lee "Analysis and new designs of digital chaotic ciphers" discloses digital chaotic ciphers.

Summary

It is an object to provide improved technologies for cryptography for increasing security of passwords.

A method and a system for generating an authentication value according to independent claims 1 and 5 as well as a method and a system for verifying an input value according to the independent claims 6 and 7 are provided. Further embodiments are subject matter of dependent claims.

The one way function is a quotient of functions having a specific rest value.

A function *f* is a one-way function if it is easy to compute but hard on average to invert it. Up to now, there is no proof that any of the functions used in cryptography so far (e.g. Hash functions) is indeed a one-way function.

With the present invention methods and systems are provided which rely on a true one-way function. The one way function is member of a class of one-way functions. All members of the class are unique one-way functions which existence is proven. The precision of the one-way function can be computed with any selected accuracy. Further, the construction of the class of one-way functions is disclosed.

By providing a true one-way function, the password of a user is completely secure. The input value can be considered as password. From the input value an authentication value (or image) is computed using a one-way function. Only the image is stored in a computing device, e.g. a server. Even if the server is hacked, the password is not accessible. There is no way to invert the image for retrieving the password. Further, an administrator of the system cannot manipulate the password.

The one-way function may be a bijective function providing a one-to-one correspondence between the input value and the authentication value.

The one way function is determined as a quotient of real functions. The one-way function can be determined as a limiting function of a quotient of functions. The one-way function can be free of any modulo function. Hereby, computational cost is largely reduced improving flexibility and making the method applicable for many kinds of devices.

In one embodiment, the rest value may depend on a sequence number. A precision of the one way function can be specified by the sequence number.

In another embodiment, the one-way function is determined in an iterative process. For example, 20 to 30 iterations may be performed.

In a further embodiment, the input value is a vector having at least two components. The input value, either being a scalar or a vector, can comprise any natural or real number. The one-way function may be a vector function having at least one component. Each component of the one-way function can be a quotient of functions.

The password can be encoded in Unicode or in ASCII code (American Standard Code for Information Interchange). For example, in ASCII-code the symbol A = 65, and the symbol B = 66. Then password ABA = 65 66 65 and the input for the one-way function can be for example: 0,0656 and 0,0665. Using Unicode or ASCII, each symbol and therefore each password can be represented as numbers.

Unicode provides a higher priority to ensuring utility for the future than to preserving past antiquities. Unicode aims in the first instance at the characters published in modern text (e.g. in the union of all newspapers and magazines printed in the world in 1988.

The one-way function can be determined, by the processor, and stored in the memory before the input value is received.

The system can be implemented in a single device, wherein the single device stores the one-way function and the computed authentication value. In another embodiment, a central device and at least one remote device can be provided. The central device, e.g. a server, can be connected with the remote device(s), e.g. a cash terminal, either by cable or wireless. The central device can store the one-way function and the authentication value. If a user has to authenticate with the remote device, the password is inputted in the remote device. The password is transmitted to the central device where the function value is computed and compared to the authentication value. A signal is provided from the central device to the remote device whether authentication was successful. The password is neither stored in the remote device nor in the central device.

The method for generating an authentication value and / or the method for verifying an input value can be implemented in an ASIC (ASIC - application specific integrated circuit) or an RFID chip (RFID - radio-frequency identification).

The disclosure refers to the usage of a computing device. The computing device may comprise one or more processors configured to execute instructions. Further, the computing device may comprise a memory in form of volatile memory (e.g. RAM - random access memory) and / or non-volatile memory (e.g. a magnetic hard disk, a flash memory). The device may further comprise means for connecting and / or communicating with other (computing) devices, for example by a wired connection (e.g. LAN - local area network, Firewire (IEEE 1394) and / or USB - universal serial bus) or by a wireless connection (e.g. WLAN - wireless local area network, Bluetooth and / or WiMAX - Worldwide Interoperability for Microwave Access). The computing device may comprise a device for registering user input, for example a keyboard, a mouse and / or a touch pad. The device may comprise a display device or may be connected to a display device. The display device may be a touch-sensitive display device (e.g. a touch screen).

The features described in context of the methods also apply to the systems and vice versa.

Description of embodiments

In one embodiment, a user enters a password A into a system where the one-way function is stored. The password A may be a vector $x = (x_{k-1}, ..., x_0)$, $k \geq 2$. An authentication value $g_A = (g_0, ..., g_{k-2})$, $k \geq 2$ is computed using the one-way function. Only the vector $g_A = (g_0, ..., g_{k-2})$ is stored in the system, but not the password.

For authentication a user enters a password B. Using the one-way function, a vector $g_B$ is computed and compared to the stored vector $g_A$. Authentication is successful if $g_B = g_A$.

In the following, the construction of a class of one-way functions is disclosed.

Let $G$ be a compact interval in $R$ ($R$ is the set of real numbers); $k \in N$ fixed ($N$ is the set of natural numbers). $M = G \times \cdots \times G = G^k$ and $\varphi: M \to G$, $\varphi \in C_{s+1}(M)$ a is map wherein $s \geq 2$ ($s \in N$). The value $\xi$ may be a fixed point of $\varphi$, for example $\varphi(\xi, ..., \xi) = \xi$. Given $x^0 = (x_{k-1}, ..., x_0) \in M$ the iteration

$$x_{n+k} = \varphi(x_{n+k-1}, ..., x_n) \qquad \text{(Equation 1.0.1)}$$

is considered. By defining $e_n = x_n - \xi$ it can be assumed without any loss of generality that $\xi = 0$. Therefore, equation 1.0.1 can be written as follows:

$$e_{n+k} = \varphi(e_{n+k-1}, ..., e_n) \qquad \text{(Equation 1.0.2)}.$$

The initial values $e_0, e_1, ..., e_{k-1}$ of the admissible interval of $\varphi$ represent the seeds of the iteration (1.0.2).

The choice of the natural number $k$ is free, all derivations of the iteration function $\varphi$ until $s$-1 disappear at the fixed-point $\xi$, and the $s$-derivative of the function $\varphi$ at $(\xi, ..., \xi)$ is $Q \neq 0$.

$$Q := \frac{1}{s!} \frac{\partial^s \varphi(z_1, \ldots, z_k)}{\partial z_k{}^s} \bigg|_{(0, \ldots, 0)} \neq 0$$

It is assumed without loss of generality that $Q = 1$, (else $Q \neq 1$) and a new iteration is defined: $\quad \varphi := \dfrac{\varphi(e^0)}{Q}$ .

It is a further object of the implementation of a cryptographic system and method to provide classes of one-way-functions for enabling a mapping of the vector $e^0 = (e_{k-1}, \cdots, e_0)$ (the input, with $e_i \in \mathfrak{R}$ ) into the vector $\gamma = (\gamma_0(e^0), \cdots, \gamma_{k-2}(e^0))$ (the output) in such a way as to insure that the output dependent on the input is unique, wherein $e_{k-1}$ is fixed.

For each value of $k \geq 2$ and $s \geq 2$ there can always be found a function $\varphi$, and therefore these parameters can be chosen by a user.

The sequence (1.0.2) is considered with $e_0, \cdots, e_{k-1} \in G$ and $e_0, \cdots, e_{k-1} \neq 0$. If

$$(2.0.6) \qquad e_0, \frac{e_1}{e_0}, \ldots, \frac{e_{k-1}}{e_{k-2}} \ and \ \frac{(e_0)^s}{e_{k-1}}$$

*all are absoluty smaller or equal $\varepsilon$, where $\varepsilon$ depending on $\varphi$ is chosen sufficiently small, then the normalized error*

$$(2.0.7) \qquad f_n := |e_n|$$

*satisfies:*

*(1) $f_n \to 0$ for $n \to \infty$, and there exist functions $\alpha_0,...,\alpha_k$ depends of $e^0 = (e_0,\cdots,e_{k-1})$ such that $0 < \alpha_0(e^0) < \alpha_1(e^0) < \cdots < \alpha_k(e^0) := s\ \alpha_0(e^0)$ and for $n = km + j$, $m \to \infty$*

$$f_{km+j} = e^{-s^m \alpha_j}\left(1 + O\left(e^{-(\alpha_{j+1} - \alpha_j)s^m/(s-1)}\right)\right), \quad j = 0, \cdots, k-1$$

*holds.*
*(2) From 1 it follows that*

$$\frac{\log f_{km+j+1}}{\log f_{km+j}} = \gamma_j + O\left(s^{-m}e^{-s^m \theta_j}\right).$$

*with*

$$\theta_j = \min\left\{\alpha_{j+2} - \alpha_{j+1}, \alpha_{j+1} - \alpha_j\right\}, \ j = 0, \cdots, k-2$$

*(3) All functions $\gamma_j(e^0)$ are dense in the interval $I := (1,s)$.*

*Furthermore:*

$$\gamma_j > 1, \prod_{j=0}^{k-1} \gamma_j = s.$$

General remarks:

1. In the application, log() is always the natural logarithm.
2. If $\xi = 0$ then $e_n = x_n$.

For the input parameters $k = 2$; $s = 2$ and $x^0 = (x_1,x_0)$, the iteration is shown in table 1.1.

Table 1.1 - iteration with $k = 2$

| $n$ | $x_n$ | |
|---|---|---|
| 0 | $x_0$ | |
| 1 | $x_1$ | |
| 2 | $x_2 = \varphi(x_1,x_0)$ | |
| 3 | $x_3 = \varphi(x_2,x_1)$ | $= \varphi(\varphi(x_1,x_0),x_1)$ |
| 4 | $x_4 = \varphi(x_3,x_2)$ | $= \varphi([\varphi(\varphi(x_1,x_0),x_1)],[\varphi(x_1,x_0)])$ |

(continued)

| $n$ | $x_n$ | |
|---|---|---|
| 5 | $x_5 = \varphi(x_4,x_3)$ | $= \varphi([\varphi(\varphi(\varphi(x_1,x_0),\varphi(x_1,x_0))],[\varphi(\varphi(x_1,x_0),x_1)])$ |
| ⋮ | ⋮ | |
| $n$ | $x_n = \varphi(x_{n-1},x_{n-2})$ | |
| ⋮ | ⋮ | |

The following properties can be observed:

1. For $n \geq 2$, $x_n$ depends only on $x_1$ and $x_0$.
2. Each iteration produces a very complex function, which cannot be reproduced explicitly.
3. The functions $x_n$ are functions depending on $x_0$ and $x_1$ for each $n$. The function $x_n$ is not known explicitly, but the function can be calculated at the point $x^0 = (x_1,x_0)$. In the table the functions $x_n$ for $n = 3$, 4 and 5 are given explicit. If $n$ is large, the function $x_n$ becomes very complex and an analytical representation is not possible.
4. The initial values $x^0 = (x_1,x_0)$ produce a sequence of values $\{x_n\}$ that always converge to a fix-point $\xi$ when $n \to \infty$.

In table 1.2 the distances $f_n$ are shown for several values of $n$.

Table 1.2 - $f_n$ , $k = 2$

| $n$ | $x_n = \varphi(x_{n-1},x_{n-2})$ | $f_n = |x_n - \xi|$ |
|---|---|---|
| 0 | $x_0$ | $f_0$ |
| 1 | $x_1$ | $f_1$ |
| 2 | $x_2$ | $f_2$ |
| 3 | $x_3$ | $f_3$ |
| 4 | $x_4$ | $f_4$ |
| 5 | $x_5$ | $f_5$ |
| 6 | $x_6$ | $f_6$ |
| ⋮ | ⋮ | ⋮ |
| $n$ | $x_n$ | $f_n$ |
| ⋮ | ⋮ | ⋮ |

In the following, an example is provided: Let $k = 2$, $s = 2$ *and* $\varphi(x,y) = x^2 + y^2$, then the fix point is $\xi = 0$ and $Q = 1$.

The Table 1.1 is

| $n$ | $m$ | $j$ | $x_{n+2} = \varphi(x_{n+1},x_n)$ |
|---|---|---|---|
| 0 | 0 | 0 | 0,0656 |
| 1 | 0 | 1 | 0,0665 |
| 2 | 1 | 0 | 0,00872561 |
| 3 | 1 | 1 | 0,00449839 |
| 4 | 2 | 0 | 9,6372E-05 |
| 5 | 2 | 1 | 2,0245E-05 |
| 6 | 3 | 0 | 9,6974E-09 |
| 7 | 3 | 1 | 4,0985E-10 |
| 8 | 4 | 0 | 9,4207E-17 |
| 9 | 4 | 1 | 1,6798E-19 |
| 10 | 5 | 0 | 8,875E-33 |
| 11 | 5 | 1 | 2,8216E-38 |

(continued)

| $n$ | $m$ | $j$ | $x_{n+2} = \varphi(x_{n+1}, x_n)$ |
|---|---|---|---|
| 12 | 6 | 0 | 7,8765E-65 |
| 13 | 6 | 1 | 7,9617E-76 |
| 14 | 7 | 0 | 6,204E-129 |
| 15 | 7 | 1 | 6,339E-151 |
| 16 | 8 | 0 | 3,849E-257 |

Remarks:

1. It can be seen that in every row $n = 2m + j$, because $k=2$
2. The input (password) is $x_0 = 0{,}0656$, $x_1 = 0{,}0665$
3. Calculation for example:

| $x_0$ | 0,0656 |
|---|---|
| $x_1$ | 0,0665 |
| $x_2$ | $\varphi(x_1, x_0)$ |
| | 0,00872561 |
| $x_3$ | $\varphi(x_2, x_1)$ |
| | 0,00449839 |

4. $x_n$ converges to zero very quickly. The maximum precision from Excel is by n=14 reached.
Now the Table 1.2 and the authentication values:

| $n$ | $j$ | $x_n$ | $f_n = \lvert x_n \rvert$ | $\ln(f_n)$ | $\gamma_j = \dfrac{\ln(f_{n+1})}{\ln(f_n)}$ |
|---|---|---|---|---|---|
| 0 | 0 | 0,0656 | 0,0656 | -2,72417958 | 0,9949980347123080 |
| 1 | 1 | 0,0665 | 0,0665 | -2,71055333 | 1,7492712076570000 |
| 2 | 0 | 0,00872561 | 0,00872561 | -4,7414929 | 1,1397331321568500 |
| 3 | 1 | 0,00449839 | 0,00449839 | -5,40403655 | 1,7111833662462200 |
| 4 | 0 | 9,6372E-05 | 9,6372E-05 | -9,24729746 | 1,1687321929637500 |
| 5 | 1 | 2,0245E-05 | 2,0245E-05 | -10,8076142 | 1,7072603882415500 |
| 6 | 0 | 9,6974E-09 | 9,6974E-09 | -18,4514117 | 1,1714674530871500 |
| 7 | 1 | 4,0985E-10 | 4,0985E-10 | -21,6152283 | 1,7071778412800200 |
| 8 | 0 | 9,4207E-17 | 9,4207E-17 | -36,9010387 | 1,1715241093455300 |
| 9 | 1 | 1,6798E-19 | 1,6798E-19 | -43,2304565 | 1,7071777677360600 |
| 10 | 0 | 8,875E-33 | 8,875E-33 | -73,8020742 | 1,1715241598139300 |
| 11 | 1 | 2,8216E-38 | 2,8216E-38 | -86,460913 | 1,7071777677359400 |
| 12 | 0 | 7,8765E-65 | 7,8765E-65 | -147,604148 | **1,1715241598140100** |
| 13 | 1 | 7,9617E-76 | 7,9617E-76 | -172,921826 | **1,7071777677359400** |
| 14 | 0 | 6,204E-129 | 6,204E-129 | -295,208297 | 1,1715241598140100 |

(continued)

| n | j | $x_n$ | $f_n = \|x_n\|$ | $\ln(f_n)$ | $\gamma_j = \dfrac{\ln(f_{n+1})}{\ln(f_n)}$ |
|---|---|---|---|---|---|
| 15 | 1 | 6,339E-151 | 6,339E-151 | -345,843652 | 1,7071777677359400 |
| 16 | 0 | 3,849E-257 | 3,849E-257 | -590,416594 | |

Remarks

- If $n$=12 und $n$=13 the authentications values very exactly. In the next row, the values repeat, because the accuracy is reached (see the values of $f_{14}$, $f_{15}$).
- Because the convergence is super linear, $n$ is not big, in this case $n$=14.
- With other inputs $x^0 = (x_1, x_0)$ there are always new values for $\gamma_j$, $j = 0,1$.
- Note that $\gamma_1 = \dfrac{2}{\gamma_0}$ and for this reason only $\gamma_0$ is an authentication value.

Table 1.2b

| $x_0$ | $x_1$ | $\gamma_0$ | $\gamma_1$ |
|---|---|---|---|
| 0,0656 | 0,0665 | 1,17152416 | 1,70717777 |
| 0,06 | 0,055 | 1,17801371 | 1,69777311 |
| 0,0156 | 0,05 | 1,08013376 | 1,85162253 |
| 0,0811 | 0,012 | 1,7081533 | 1,1708551 |

Having chosen the suitable assumptions about the initial values $e^0 = (e_{k-1}, ..., e_0)$ (see equation (2.0.6)) and about the iterating with the function $\varphi$, it can be shown that $f_n \to 0$ for $n \to \infty$. There exist functions $\gamma_0(e^0), ..., \gamma_{k-2}(e^0)$ depending on $e^0 = (e_{k-1}, ..., e_0)$ such that for $m \to \infty$ $n = km + j$ (e.g. $j \equiv n \bmod k$) the following results:

$$\frac{\ln f_{km+j+1}}{\ln f_{km+j}} = \gamma_j(e^0) + O(s^{-m}e^{-s^m \Theta_j}) \qquad \text{(Equation 1.3)},$$

wherein $1 < \gamma_j(e^0) < s$ and $\Theta_j = \min\{\alpha_{j+2} - \alpha_{j+1}, \alpha_{j+1} - \alpha_j\}$.
In equation 1.3, $k$ is fixed, $j = 0,1, ..., k - 1$ and $m$ is a sequence number ($m = 0,1,2, ...$).
Equation 1.3 can be reformulated into:

$$\frac{\ln f_{km+1}}{\ln f_{km}} = \gamma_0(e^0) + O(s^{-m}e^{-s^m \Theta_0})$$

$$\frac{\ln f_{km+2}}{\ln f_{km+1}} = \gamma_1(e^0) + O(s^{-m}e^{-s^m \Theta_1})$$

$$\vdots$$

$$\frac{\ln f_{km+k-1}}{\ln f_{km+k-2}} = \gamma_{k-2}(e^0) + O(s^{-m}e^{-s^m \Theta_{k-2}})$$

It can be shown that $\gamma_j(e^0)$, $j = 0, ..., k - 2$ cannot be expressed with an analytical formula, but thanks to the equation 1.3 the values of these functions can be calculated for each input vector $e^0 = (e_{k-1}, ..., e_0)$ in a one way and unique manner and with any precision one can choose.

The obtaining of the limit of the following ratio

$$\lim_{n \to \infty} \frac{\ln(f_{n+1})}{\ln(f_n)} = \gamma_j$$

with $n = km + j$ or $j \equiv n \bmod k$, $m$ increasing from 0 to $\infty$, $k \geq 2$ and $j = 0, ..., k - 1$ leads to the one-way function.

From equation 1.3 follows that the rest $O(...)$ becomes very small with increasing $m$. Thus, for large $m$ the quotient is $\gamma_j(e^0)$. This is a new limiting function which can be computed. But, it is impossible to guess this function. The term in $O(...)$ of equation 1.3 determines the precision of the calculation. Each computing device has a fixed mantissa determining its accuracy. By defining constraints for $O(...)$ the accuracy of the computing device can be determined.

From equation 1.3 follows that the error of calculation is

$$\left| \gamma_n - \gamma_j \right| \leq C \left| s^{-m} \exp(-s^m \theta_j) \right|$$

where $C$ is a constant and depends on $\varphi$ and $n = km + j$.

Remarks:

- The error depends on $m$. The error is as small as $m$ grows.
- For example: $C \leq 1$ and $\theta_j \geq 1$ then $|\gamma_n - \gamma_j| \leq |s^{-m} \exp(-s^m)|$
- A simple calculation shows how big $m$ is if the error equal to $10^{-w}$ ($w$ is an integer).

For example the error is about $10^{-128}$ for $m=8$, and $s=2$, $k=3$.

The security of the one-way function depends on the value of $k$. In general, a real number is computed by a processor with a precision of 15 decimal digits. Each digit can be one of the figures 0 to 9. Thus, if the real number is guessed, there are $10^{15}$ possibilities from which has to be chosen. In other words, for each real number (e.g. each $\gamma_j$) there are 50 Bits. By increasing the value of $k$ (which may be selected by a user), the security is increased.

Now, the reverse function calculation is briefly discussed:

In order to find the reverse function, what do one have to do? As an assumption the values of the function $\gamma = (\gamma_0(e^0), ..., \gamma_{k-2}(e^0))$ and also the iteration function $\varphi$ are known. It shall be tried to calculate the input vector $e^0 = (e_{k-1}, ..., e_0)$. What could one do? The only thing that can be done is to choose initial values $\tilde{e}^0 = (\tilde{e}_{k-1}, ..., \tilde{e}_0)$ randomly and generate the functions $\tilde{\gamma}_j(e^0)$, $j = 0, ..., k - 2$ with the function $\varphi$. Then, these values have to be compared with the known values $\gamma_j$. If $\gamma_j = \tilde{\gamma}_j$ is achieved the input vector $e^0$ can be determined. The vector $e^0 = (e_{k-1}, ..., e_0)$ depends on the parameter $k \geq 2$. If $k > 4$, the probability to find out $e^0$ is very small.

In the following, the calculation of the functions $\gamma_j$ is shown with examples.

In a first example, $k = 2$ and $s = 2$. A calculation with the following form $\gamma_j$, $j = 0, ..., k - 2$ provides only one value $\gamma_0$. The results are shown in table 1.2 and table 1.2b.

Thus, when $n$ increases the values of the rows having $j = 0$ converge towards $\gamma_0$ exactly.

Example 2

The following parameters are chosen: $k = 3$; $s = 2$ and $\varphi(x,y,z) = x^2 + y^2 + z^2$. This leads to a calculation with the following form $\gamma_j$, $j = 0, ..., k - 2$ with the values $\gamma_0$ and $\gamma_1$. The results are shown in table 1.4.

Table 1.4 - $k = 3$, $s = 2$

| $n$ | $f_n$ | $\gamma_j$ | $j = n \bmod 2$ |
|---|---|---|---|
| 0 | $f_0$ | | |
| 1 | $f_1$ | | |
| 2 | $f_2$ | | |
| 3 | $f_3$ | $\log(f_3)/\log(f_2)$ | 0 |
| 4 | $f_4$ | $\log(f_4)/\log(f_3)$ | 1 |

(continued)

| $n$ | $f_n$ | $\gamma_j$ | $j = n \bmod 2$ |
|---|---|---|---|
| 5 | $f_5$ | $\log(f_5)/\log(f_4)$ | 2 |
| 6 | $f_6$ | $\log(f_6)/\log(f_5)$ | 0 |
| 7 | $f_7$ | $\log(f_7)/\log(f_6)$ | 1 |
| 8 | $f_8$ | $\log(f_8)/\log(f_7)$ | 2 |
| 9 | $f_9$ | $\log(f_9)/\log(f_8)$ | 0 |
| 10 | $f_{10}$ | $\log(f_{10})/\log(f_9)$ | 1 |
| 11 | $f_{11}$ | $\log(f_{11})/\log(f_{10})$ | 2 |
| 12 | ⋮ | ⋮ | ⋮ |

| $n$ | $m$ | $j$ | $x_n$ | $f_n$ | $ln(f_n)$ | $g_j$ |
|---|---|---|---|---|---|---|
| 0 | 0 | 0 | 0,08277852 | 0,08277852 | -2,49158667 | 1,40625652 |
| 1 | 0 | 1 | 0,03008255 | 0,03008255 | -3,50381001 | 0,69188344 |
| 2 | 0 | 2 | 0,08854644 | 0,08854644 | -2,42422812 | 1,71627035 |
| 3 | 1 | 0 | 0,01559772 | 0,01559772 | -4,16063084 | 1,13246884 |
| 4 | 1 | 1 | 0,00898872 | 0,00898872 | -4,71178476 | 1,02041009 |
| 5 | 1 | 2 | 0,00816456 | 0,00816456 | -4,80795271 | 1,63218188 |
| 6 | 2 | 0 | 0,00039075 | 0,00039075 | -7,84745328 | 1,12405108 |
| 7 | 2 | 1 | 0,00014761 | 0,00014761 | -8,82093836 | 1,0898264 |
| 8 | 2 | 2 | 6,6834E-05 | 6,6834E-05 | -9,6132915 | 1,61611947 |
| 9 | 3 | 0 | 1,7894E-07 | 1,7894E-07 | -15,5362276 | 1,12352816 |
| 10 | 3 | 1 | 2,6256E-08 | 2,6256E-08 | -17,4553893 | 1,10146932 |
| 11 | 3 | 2 | 4,4669E-09 | 4,4669E-09 | -19,2265757 | 1,61498047 |
| 12 | 4 | 0 | 3,2728E-14 | 3,2728E-14 | -31,0505442 | 1,12340205 |
| 13 | 4 | 1 | 7,0931E-16 | 7,0931E-16 | -34,882245 | 1,10237031 |
| 14 | 4 | 2 | 1,9953E-17 | 1,9953E-17 | -38,4531514 | 1,61496825 |
| 15 | 5 | 0 | 1,0716E-27 | 1,0716E-27 | -62,1006184 | 1,12339781 |
| 16 | 5 | 1 | 5,0351E-31 | 5,0351E-31 | -69,763699 | 1,10238281 |
| 17 | 5 | 2 | 3,9812E-34 | 3,9812E-34 | -76,9063027 | 1,61496824 |
| 18 | 6 | 0 | 1,1484E-54 | 1,1484E-54 | -124,201237 | 1,12339781 |
| 19 | 6 | 1 | 2,5353E-61 | 2,5353E-61 | -139,527397 | 1,10238282 |
| 20 | 6 | 2 | 1,585E-67 | 1,585E-67 | -153,812605 | 1,61496824 |
| 21 | 7 | 0 | 1,319E-108 | 1,319E-108 | -248,402473 | 1,12339781 |
| 22 | 7 | 1 | 6,428E-122 | 6,428E-122 | -279,054795 | **1,10238282** |
| 23 | 7 | 2 | 2,512E-134 | 2,512E-134 | -307,625211 | **1,61496824** |
| 24 | 8 | 0 | 1,739E-216 | 1,739E-216 | -496,804947 | **1,12339781** |

If the input vectors $e^0 = (e_2, e_1, e_0)$ are different, the output vectors $\gamma_0$, $\gamma_1$ are also different which is shown in table 1.5.

Table 1.5 - $k = 3$, $s = 2$, $\gamma_0$, $\gamma_1$

|  | $e_2$ | $e_1$ | $e_0$ | $\gamma_0$ | $\gamma_1$ |
|---|---|---|---|---|---|
| 1 | 0,08277852 | 0,03008255 | 0,08854644 | 1,61496825 | 1,12339781 |
| 2 | 0,05172532 | 0,06567926 | 0,02636764 | 1,13131849 | 1,35595047 |
| 3 | 0,04785215 | 0,06915241 | 0,06931018 | 1,53961258 | 1,10587965 |
| 4 | 0,06648853 | 0,0939763 | 0,02957727 | 1,45698493 | 1,200693 |
| 5 | 0,06290955 | 0,02867138 | 0,0959536 | 1,65459217 | 1,09544358 |
| 6 | 0,07518497 | 0,01575685 | 0,03543572 | 1,25640279 | 1,07828773 |
| 7 | 0,06131931 | 0,06423678 | 0,08227866 | 1,5665193 | 1,11198956 |
| 8 | 0,0558619 | 0,01851977 | 0,05414448 | 1,11224265 | 1,08409771 |
| 9 | 0,07505509 | 0,07219327 | 0,012853 | 1,52684946 | 1,10488223 |
| 10 | 0,01333201 | 0,0322801 | 0,04399602 | 1,06611017 | 1,11130835 |
| 11 | 0,07947385 | 0,0357668 | 0,06963286 | 1,10575188 | 1,58314779 |
| 12 | 0,02117967 | 0,04792535 | 0,09397479 | 1,65433128 | 1,07959599 |
| 13 | 0,08395039 | 0,08784868 | 0,07160271 | 1,42449652 | 1,15131459 |
| 14 | 0,08877965 | 0,01834684 | 0,05660238 | 1,08465244 | 1,53654995 |
| 15 | 0,07177928 | 0,03597698 | 0,04420756 | 1,18309644 | 1,1205296 |
| 16 | 0,06175002 | 0,01083102 | 0,0551914 | 1,12302595 | 1,07854314 |
| 17 | 0,0238821 | 0,05480891 | 0,02610487 | 1,08937282 | 1,2983053 |
| 18 | 0,06810276 | 0,07938874 | 0,0732548 | 1,48396401 | 1,12863061 |
| 19 | 0,0382356 | 0,06486731 | 0,03965388 | 1,10470519 | 1,2539318 |
| 20 | 0,06536956 | 0,0975969 | 0,09803265 | 1,1231373 | 1,20008812 |

The features disclosed in the specification and in the claims can be relevant for implementing several embodiments in any possible combination with each other.

**Claims**

1. Method for generating an authentication value, wherein the method is performed by a processor of a computing device and comprises the following steps:

   - receiving an input value $e^0 = (e_{k-1}, ..., e_0)$, $k \geq 2$, being a seed value,
   - computing, by the processor, an authentication value from the input value $e^0$ using a one-way function $\gamma_A = (\gamma_0, ..., \gamma_{k-2})$, $k \geq 2$, and
   - storing the authentication value in a memory,

   wherein the one way function uses an iteration function $\varphi$, a function of several variables forming a vector $e_{n+k} = \varphi(e_{n+k-1}, ..., e_n)$, $n \geq 0$, wherein $k \geq 2$ is the dimension of the vector, $\varphi\colon M \to G$, $\varphi \in C_{s+1}(M)$, $s \geq 2$ being an integer representing the number of derivative of the function $\varphi$, $\varphi$ being a map with a fixed point $\xi = 0$, $M = G \times \cdots \times G = G^k$, and wherein $G$ is a compact interval in the set of real numbers, all derivations of the iteration function $\varphi$ until $s - 1$ disappear at the fixed-point $\xi$, and the s-derivative of the function $\varphi$ at $(\xi, ..., \xi)$ is

   $$Q := \frac{1}{s!} \frac{\partial^s \varphi(z_1, ..., z_k)}{\partial z_k^s}\bigg|_{(0, ..., 0)} \neq 0,$$

   **characterized in that** the one way function is the limit of a quotient of real functions

   $$\lim_{n \to \infty} \frac{\ln f_{n+1}}{\ln f_n} = \gamma_j$$

   with $f_n = |e_n|$.

**2.** Method according to claim 1 wherein the value $\gamma_j$ depends on a sequence number.

**3.** Method according to claim 2, wherein a precision of the one way function can be specified by the sequence number.

**4.** Method according to any one of the preceding claims, wherein the one-way function is determined, by the processor, and stored in the memory before the input value is received.

**5.** System for generating an authentication value, comprising a processor and a memory and being configured to:

- receive an input value $e^0 = (e_{k-1}, ..., e_0)$, $k \geq 2$, being a seed value,
- compute an authentication value from the input value $e^0$ using a one-way function $\gamma_A = (\gamma_0, ..., \gamma_{k-2})$, $k \geq 2$, and
- store the authentication value in the memory,

wherein the one way function uses an iteration function $\varphi$, a function of several variables forming a vector $e_{n+k} = \varphi(e_{n+k-1}, ..., e_n)$, $n \geq 0$, wherein $k \geq 2$ is the dimension of the vector, $\varphi: M \to G$, $\varphi \in C_{s+1}(M)$, $s \geq 2$ being an integer representing the number of derivative of the function $\varphi$, $\varphi$ being is a map with a fixed point $\xi = 0$, $M = G \times \cdots \times G = G^k$, and wherein $G$ is a compact interval in the set of real numbers, all derivations of the iteration function $\varphi$ until $s - 1$ disappear at the fixed-point $\xi$, and the s-derivative of the function $\varphi$ at $(\xi, ..., \xi)$ is

$$Q := \frac{1}{s!} \frac{\partial^s \varphi(z_1, ..., z_k)}{\partial z_k^s} \bigg| (0, ...,0) \neq 0,$$

**characterized in that** the one way function is the limit of a quotient of real functions

$$\lim_{n \to \infty} \frac{\ln f_{n+1}}{\ln f_n} = \gamma_j$$

with $f_n = |e_n|$.

**6.** Method for verifying an input value, wherein the method is performed by a processor of a computing device and comprises the following steps:

- receiving an input value of dimension $k$,
- computing, by the processor, a function value from the input value using a one-way function $\gamma_A = (\gamma_0, ..., \gamma_{k-2})$, $k \geq 2$, wherein the one way function uses an iteration function $\varphi$, a function of several variables forming a vector $e_{n+k} = \varphi(e_{n+k-1}, ..., e_n)$, $n \geq 0$, wherein $(e_{k-1}, ..., e_0)$ is a seed value, wherein $k \geq 2$ is the dimension of the vector, wherein $\phi: M \to G$, $\varphi \in C_{s+1}(M)$, $s \geq 2$ being an integer representing the number of derivative of the function $\varphi$, $\varphi$ being is a map with a fixed point $\xi = 0$, $M = G \times \cdots \times G = G^k$, and wherein $G$ is a compact interval in the set of real numbers, all derivations of the iteration function $\varphi$ until $s - 1$ disappear at the fixed-point $\xi$, and the s-derivative of the function $\varphi$ at $(\xi, ..., \xi)$ is

$$Q := \frac{1}{s!} \frac{\partial^s \varphi(z_1, ..., z_k)}{\partial z_k^s} \bigg| (0, ...,0) \neq 0,$$

- comparing, by the processor, the computed function value with an authentication value which is stored in a memory, and
- providing a signal whether the function value and the authentication value are identical,

**characterized in that** the one way function is the limit of a quotient of real functions

$$\lim_{n \to \infty} \frac{\ln f_{n+1}}{\ln f_n} = \gamma_j$$

with $f_n = |e_n|$.

7. System for verifying an input value, comprising a processor and a memory and being configured to:

- receive an input value of dimension $k$,
- compute a function value from the input value using a one-way function $\gamma_A = (\gamma_0, ..., \gamma_{k-2})$, $k \geq 2$, wherein the one way function uses an iteration function $\varphi$, a function of several variables forming a vector $e_{n+k} = \varphi(e_{n+k-1}, ..., e_n)$, $n \geq 0$, wherein $(e_{k-1}, ..., e_0)$ is a seed value, wherein $k \geq 2$ is the dimension of the vector, wherein $\varphi: M \to G$, $\varphi \in C_{s+1}(M)$, $s \geq 2$ is an integer representing the number of derivative of the function $\varphi$, $\varphi$ is a map with a fixed point $\xi=0$, $M = G \times \cdots \times G = G^k$, and wherein $G$ is a compact interval in the set of real numbers, all derivations of the iteration function $\varphi$ until $s - 1$ disappear at the fixed-point $\xi$, and the $s$-derivative of the function $\varphi$ at $(\xi, ..., \xi)$ is

$$Q := \frac{1}{s!}\frac{\partial^s \varphi(z_1, ..., z_k)}{\partial z_k^s}\bigg|(0, ...,0) \neq 0,$$

- compare the computed function value with an authentication value which is stored in the memory, and
- provide a signal whether the function value and the authentication value are identical, **characterized in that** the one way function is the limit of a quotient of real functions

$$\lim_{n\to\infty}\frac{\ln f_{n+1}}{\ln f_n} = \gamma_j$$

with $f_n = |e_n|$.

**Patentansprüche**

1. Verfahren zum Erzeugen eines Authentisierungswerts, wobei das Verfahren durch einen Prozessor eines Rechengeräts durchgeführt wird und die folgenden Schritte umfasst:

- Empfangen eines Eingabewerts $e^0 = (e_{k-1}, ..., e_0)$, $k \geq 2$, der ein Startwert ist,
- mittels des Prozessors Berechnen eines Authentisierungswerts aus dem Eingabewert $e^0$ unter Verwendung einer Einwegfunktion $\gamma_A = (\gamma_0, ..., \gamma_{k-2})$, $k \geq 2$, und
- Speichern des Authentisierungswerts in einem Speicher,

wobei die Einwegfunktion eine Iterationsfunktion $\varphi$ verwendet, eine Funktion von mehreren Variablen, die einen Vektor $e_{n+k} = \varphi(e_{n+k-1}, ..., e_n)$, $n \geq 0$, bilden, wobei $k \geq 2$ die Dimension des Vektors ist, wobei $\varphi:M \to G$, $\varphi \in C_{s+1}$ $(M)$ ist, wobei $s \geq 2$ eine ganze Zahl ist, die die Höhe der Ableitung der Funktion $\varphi$ darstellt, wobei $\varphi$ eine Abbildung mit einem Fixpunkt $\xi = 0$ ist, $M = G \times ... \times G = G^k$ ist, wobei $G$ ein kompaktes Intervall in der Menge der reellen Zahlen ist, wobei alle Ableitungen der Iterationsfunktion $\varphi$ bis $s - 1$ an dem Fixpunkt $\xi$ verschwinden, und die $s$-te Ableitung der Funktion $\varphi$ an der Stelle $(\xi, ..., \xi)$ ist:

$$Q := \frac{1}{s!}\frac{\partial^s \varphi(z_1, ..., z_k)}{\partial z_k^s}\bigg|(0, ...,0) \neq 0,$$

**dadurch gekennzeichnet, dass** die Einwegfunktion der Limes eines Quotienten von reellen Funktionen ist:

$$\lim_{n\to\infty}\frac{\ln f_{n+1}}{\ln f_n} = \gamma_j$$

mit $f_n = |e_n|$.

2. Verfahren nach Anspruch 1, wobei der Wert $\gamma_j$ von einer Folgenzahl abhängt.

3. Verfahren nach Anspruch 2, wobei eine Präzision der Einwegfunktion durch die Folgenzahl spezifiziert werden kann.

4.  Verfahren nach einem der vorhergehenden Ansprüche, wobei die Einwegfunktion durch den Prozessor bestimmt und in dem Speicher gespeichert wird, bevor der Eingabewert empfangen wird.

5.  System zum Erzeugen eines Authentisierungswerts, das einen Prozessor und einen Speicher umfasst, und konfiguriert ist, um:

    - einen Eingabewert $e^0 = (e_{k-1}, ..., e_0)$, $k \geq 2$, der ein Startwert ist, zu empfangen,
    - einen Authentisierungswert aus dem Eingabewert $e^0$ unter Verwendung einer Einwegfunktion $\gamma_A = (\gamma_0, ..., \gamma_{k-2})$, $k \geq 2$, zu berechnen, und
    - den Authentisierungswert in dem Speicher zu speichern,

    wobei die Einwegfunktion eine Iterationsfunktion $\varphi$ verwendet, eine Funktion von mehreren Variablen, die einen Vektor $e_{n+k} = \varphi(e_{n+k-1}, .., e_n)$, $n \geq 0$, bilden, wobei $k \geq 2$ die Dimension des Vektors ist, wobei $\varphi : M \to G$, $\varphi \in C_{s+1}(M)$ ist, wobei $s \geq 2$ eine ganze Zahl ist, die die Höhe der Ableitung der Funktion $\varphi$ darstellt, wobei $\varphi$ eine Abbildung mit einem Fixpunkt $\xi = 0$ ist, wobei $M = G \times ... \times G = G^k$ ist, und wobei $G$ ein kompaktes Intervall in der Menge der reellen Zahlen ist, wobei alle Ableitungen der Iterationsfunktion $\varphi$ bis $s - 1$ an dem Fixpunkt $\xi$ verschwinden, und die $s$-te Ableitung der Funktion $\varphi$ an der Stelle $(\xi, ..., \xi)$ ist:

    $$Q := \frac{1}{s!} \frac{\partial^s \varphi(z_1, ..., z_k)}{\partial z_k^s} \bigg| (0, ..., 0) \neq 0,$$

    **dadurch gekennzeichnet, dass** die Einwegfunktion der Limes eines Quotienten von reellen Funktionen ist:

    $$\lim_{n \to \infty} \frac{\ln f_{n+1}}{\ln f_n} = \gamma_j$$

    mit $f_n = |e_n|$

6.  Verfahren zum Verifizieren eines Eingabewerts, wobei das Verfahren durch einen Prozessor eines Rechengeräts durchgeführt wird und die folgenden Schritte umfasst:

    - Empfangen eines Eingabewerts der Dimension $k$,
    - mittels des Prozessors Berechnen eines Funktionswerts aus dem Eingabewert unter Verwendung einer Einwegfunktion $\gamma_A = (\gamma_0, ..., \gamma_{k-2})$, $k \geq 2$, wobei die Einwegfunktion eine Iterationsfunktion $\varphi$ verwendet, eine Funktion von mehreren Variablen, die einen Vektor $e_{n+k} = \varphi(e_{n+k-1}, ..., e_n)$, $n \geq 0$, bilden, wobei $(e_{k-1}, ..., e_0)$ ein Startwert ist, wobei $k \geq 2$ die Dimension des Vektors ist, wobei $\varphi : M \to G$, $\varphi \in C_{s+1}(M)$ ist, wobei $s \geq 2$ eine ganze Zahl ist, die die Höhe der Ableitung der Funktion $\varphi$ darstellt, wobei $\varphi$ eine Abbildung mit einem Fixpunkt $\xi = 0$ ist, wobei $M = G \times ... \times G = G^k$ ist, und wobei $G$ ein kompaktes Intervall in der Menge der reellen Zahlen ist, wobei alle Ableitungen der Iterationsfunktion $\varphi$ bis $s - 1$ an dem Fixpunkt $\xi$ verschwinden, und die $s$-te Ableitung der Funktion $\varphi$ an der Stelle $(\xi, ..., \xi)$ ist:

    $$Q := \frac{1}{s!} \frac{\partial^s \varphi(z_1, ..., z_k)}{\partial z_k^s} \bigg| (0, ..., 0) \neq 0,$$

    - mittels des Prozessors Vergleichen des berechneten Funktionswerts mit einem Authentisierungswert, der in dem Speicher gespeichert ist, und
    - Bereitstellen eines Signals, ob der Funktionswert und der Authentisierungswert identisch sind,

    **dadurch gekennzeichnet, dass** die Einwegfunktion der Limes eines Quotienten von reellen Funktionen ist:

    $$\lim_{n \to \infty} \frac{\ln f_{n+1}}{\ln f_n} = \gamma_j$$

    mit $f_n = |e_n|$.

7. System zum Verifizieren eines Eingabewerts, das einen Prozessor und einen Speicher umfasst, und konfiguriert ist, um:

- einen Eingabewert der Dimension $k$ zu empfangen,
- einen Funktionswert zu berechnen aus dem Eingabewert unter Verwendung einer Einwegfunktion $\gamma_A = (\gamma_0, ..., \gamma_{k-2})$, $k \geq 2$, wobei die Einwegfunktion eine Iterationsfunktion $\varphi$ verwendet, eine Funktion von mehreren Variablen, die einen Vektor $e_{n+k} = \varphi(e_{n+k-1}, ..., e_n)$, $n \geq 0$, bilden, wobei $(e_{k-1}, ..., e_0)$ ein Startwert ist, wobei $k \geq 2$ die Dimension des Vektors ist, wobei $\varphi: M \to G$, $\varphi \in C_{s+1}(M)$ ist, wobei $s \geq 2$ eine ganze Zahl ist, die die Höhe der Ableitung der Funktion $\varphi$ darstellt, wobei $\varphi$ eine Abbildung mit einem Fixpunkt $\xi = 0$ ist, wobei $M = G \times ... \times G = G^k$ ist, und wobei $G$ ein kompaktes Intervall in der Menge der reellen Zahlen ist, wobei alle Ableitungen der Iterationsfunktion $\varphi$ bis $s - 1$ an dem Fixpunkt $\xi$ verschwinden, und die $s$-te Ableitung der Funktion $\varphi$ an der Stelle $(\xi, ..., \xi)$ ist:

$$Q := \frac{1}{s!} \frac{\partial^s \varphi(z_1, ..., z_k)}{\partial z_k^s} \bigg| (0, ..., 0) \neq 0,$$

- den berechneten Funktionswert mit einem Authentisierungswert, der in dem Speicher gespeichert ist, zu vergleichen, und
- ein Signal bereitzustellen, ob der Funktionswert und der Authentisierungswert identisch sind,

**dadurch gekennzeichnet, dass** die Einwegfunktion der Limes eines Quotienten von reellen Funktionen ist:

$$\lim_{n \to \infty} \frac{\ln f_{n+1}}{\ln f_n} = \gamma_j$$

mit $f_n = |e_n|$.

## Revendications

1. Procédé pour générer une valeur d'authentification, dans lequel le procédé est mis en oeuvre par un processeur d'un dispositif informatique et comprend les étapes suivantes :

- la réception d'une valeur d'entrée $e^0 = (e_{k-1}, ..., e_0)$, $k \geq 2$, qui est une valeur initiale,
- le calcul, par le processeur, d'une valeur d'authentification à partir de la valeur d'entrée $e^0$ en utilisant une fonction unidirectionnelle $\gamma_A = (\gamma_0, ..., \gamma_{k-2})$, $k \geq 2$, et
- le stockage de la valeur d'authentification dans une mémoire,

dans lequel la fonction unidirectionnelle utilise une fonction d'itération $\varphi$, une fonction de plusieurs variables formant un vecteur $e_{n+k} = \varphi(e_{n+k-1}, ..., e_n)$, $n \geq 0$, dans lequel $k \geq 2$ est la dimension du vecteur, $\varphi: M \to G$, $\varphi \in C_{s+1}(M)$, $s \geq 2$ étant un entier représentant le nombre de dérivées de la fonction $\varphi$, $\varphi$ étant une application avec un point fixe $\xi = 0$, $M = G \times \cdots \times G = G^k$, et dans lequel $G$ est un intervalle compact dans l'ensemble de nombres réels, toutes les dérivations de la fonction d'itération $\varphi$ jusqu'à $s - 1$ disparaissent au point fixe $\xi$, et la dérivée s de la fonction $\varphi$ à $(\xi, ..., \xi)$ est

$$Q := \frac{1}{s!} \frac{\partial^s \varphi(z_1, ..., z_k)}{\partial z_k^s} \bigg| (0, ..., 0) \neq 0,$$

**caractérisé en ce que** la fonction unidirectionnelle est la limite d'un quotient de fonctions réelles

$$\lim_{n \to \infty} \frac{\ln f_{n+1}}{\ln f_n} = \gamma_j$$

avec $f_n = |e_n|$.

**2.** Procédé selon la revendication 1, dans lequel la valeur $\gamma_j$ dépend d'un numéro de séquence.

**3.** Procédé selon la revendication 2, dans lequel une précision de la fonction unidirectionnelle peut être spécifiée par le numéro de séquence.

**4.** Procédé selon l'une quelconque des revendications précédentes, dans lequel la fonction unidirectionnelle est déterminée par le processeur et est stockée dans la mémoire avant de recevoir la valeur d'entrée.

**5.** Système pour générer une valeur d'authentification, comprenant un processeur est une mémoire, et configuré pour :

- recevoir une valeur d'entrée $e^0 = (e_{k-1}, ..., e_0)$, $k \geq 2$, qui est une valeur initiale,
- calculer une valeur d'authentification à partir de la valeur d'entrée $e^0$ en utilisant une fonction unidirectionnelle $\gamma_A = (\gamma_0, ..., \gamma_{k-2})$, $k \geq 2$, et
- stocker la valeur d'authentification dans une mémoire,

dans lequel la fonction unidirectionnelle utilise une fonction d'itération $\varphi$, une fonction de plusieurs variables formant un vecteur $e_{n+k} = \varphi(e_{n+k-1}, ..., e_n)$, $n \geq 0$, dans lequel $k \geq 2$ est la dimension du vecteur, $\varphi: M \to G$, $\varphi \in C_{s+1}(M)$, s $\geq 2$ étant un entier représentant le nombre de dérivées de la fonction $\varphi$, $\varphi$ étant une application avec un point fixe $\xi=0$, $M = G \times \cdots \times G = G^k$, et dans lequel $G$ est un intervalle compact dans l'ensemble de nombres réels, toutes les dérivations de la fonction d'itération $\varphi$ jusqu'à $s - 1$ disparaissent au point fixe $\xi$, et la dérivée s de la fonction $\varphi$ à $(\xi,..., \xi)$ est

$$Q := \frac{1}{s!} \frac{\partial^s \varphi(z_1, ..., z_k)}{\partial z_k^s} \bigg|(0, ..., 0) \neq 0,$$

**caractérisé en ce que** la fonction unidirectionnelle est la limite d'un quotient de fonctions réelles

$$\lim_{n \to \infty} \frac{\ln f_{n+1}}{\ln f_n} = \gamma_j$$

avec $f_n = |e_n|$.

**6.** Procédé pour vérifier une valeur d'entrée, dans lequel le procédé est mis en oeuvre par un processeur d'un dispositif informatique et comprend les étapes suivantes :

- recevoir une valeur d'entrée de dimension $k$,
- calculer, grâce au processeur, une valeur de fonction à partir de la valeur d'entrée en utilisant une fonction unidirectionnelle $\gamma_A = (\gamma_0, ..., \gamma_{k-2})$, $k \geq 2$, dans lequel la fonction unidirectionnelle utilise une fonction d'itération $\varphi$, une fonction de plusieurs variables formant un vecteur $e_{n+k} = \varphi(e_{n+k-1}, ..., e_n)$, $n \geq 0$, dans lequel $(e_{k-1}, .., e_0)$ est une valeur initiale, dans lequel $k \geq 2$ est la dimension du vecteur, dans lequel $\varphi: M \to G$, $\varphi \in C_{s+1}(M)$, s $\geq 2$ est un entier représentant le nombre de dérivées de la fonction $\varphi$, $\varphi$ étant une application avec un point fixe $\xi=0$, $M = G \times \cdots \times G = G^k$, et dans lequel G est un intervalle compact dans l'ensemble de nombres réels, toutes les dérivations de la fonction d'itération $\varphi$ jusqu'à $s - 1$ disparaissent au point fixe $\xi$, et la dérivée s de la fonction $\varphi$ à $(\xi,..., \xi)$ est

$$Q := \frac{1}{s!} \frac{\partial^s \varphi(z_1, ..., z_k)}{\partial z_k^s} \bigg|(0, ..., 0) \neq 0,$$

- comparer, par le processeur, la valeur de fonction calculée avec une valeur d'authentification stockée dans une mémoire, et
- fournir un signal si la valeur de fonction et la valeur d'authentification sont identiques, **caractérisé en ce que** la fonction unidirectionnelle est la limite d'un quotient des fonctions réelles

$$\lim_{n \to \infty} \frac{\ln f_{n+1}}{\ln f_n} = \gamma_j$$

avec $f_n = |e_n|$.

**7.** Système pour vérifier une valeur d'entrée, comprenant un processeur et une mémoire et configuré pour :

- recevoir une valeur d'entrée de dimension k,
- calculer une valeur de fonction à partir de la valeur d'entrée en utilisant une fonction unidirectionnelle $\gamma_A = (\gamma_0, ..., \gamma_{k-2})$, $k \geq 2$, dans lequel la fonction unidirectionnelle utilise une fonction d'itération $\varphi$, une fonction de plusieurs variables formant un vecteur $e_{n+k} = \varphi(e_{n+k-1}, ..., e_n)$, $n \geq 0$, dans lequel $(e_{k-1}, ..., e_0)$ est une valeur initiale, dans lequel $k \geq 2$ est la dimension du vecteur, dans lequel $\varphi: M \to G$, $\varphi \in C_{s+1}(M)$, $s \geq 2$ est un entier représentant le nombre de dérivées de la fonction $\varphi$, $\varphi$ est une application avec un point fixe $\xi$=0, $M = G \times \cdots \times G = G^k$, et dans lequel $G$ est un intervalle compact dans l'ensemble de nombres réels, toutes les dérivations de la fonction d'itération $\varphi$ jusqu'à $s$ - 1 disparaissent au point fixe $\xi$, et la dérivée $s$ de la fonction $\varphi$ à $(\xi, ..., \xi)$ est

$$Q := \frac{1}{s!} \frac{\partial^s \varphi(z_1, ..., z_k)}{\partial z_k^s}\bigg|(0, ..., 0) \neq 0,$$

- comparer la valeur de fonction calculée avec une valeur d'authentification stockée dans la mémoire, et
- fournir un signal pour savoir si la valeur de fonction et la valeur d'authentification sont identiques,

**caractérisé en ce que** la fonction unidirectionnelle est la limite d'un quotient des fonctions réelles

$$\lim_{n \to \infty} \frac{\ln f_{n+1}}{\ln f_n} = \gamma_j$$

avec $f_n = |e_n|$.

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2011110887 A1

- WO 9836523 A1

**Non-patent literature cited in the description**

- **M. NAOR ; M. YUNG.** Universal One-Way Hash Functions and their Cryptographic Applications. *Proceedings of the twenty-first annual ACM symposium on Theory of computing,* 1989
- **LI YANTAO et al.** Secure hash function based on chaotic tent map with changeable parameter. *High technology letters,* 2012, vol. 18 (1), 7-12
- **M. T. MOHAMMED et al.** Chaotic based secure hash algorithm. *International journal of emerging trends and technology in computer science,* 2013, vol. 2 (2), 127-133
- **M. I. MIHAILESCU.** New enrolment scheme for biometric template using has chaos-based cryptography. *Procedia Engineering,* 2014, vol. 69, 1459-1468
- **A. KANSO et al.** Keyed hash function based on a chaotic map. *Information sciences,* vol. 186, 249-264
- **A. MENEZES et al.** Handbook of applied cryptography. 1996
- **L. ROCHA.** *On the rate of convergence of 2-term recursions in Rd, Computing,* 1997, vol. 59, 187-207
- **LUIS ROCHA.** *Über die Konvergenzordnung k-stufiger Iterationen und Nullstellenbestimmung nichtlinearer Gleichungssysteme*
- **MARTIN JAGGI.** *Revisiting Frank-Wolfe: Projection-Free Sparse Convex Optimization*
- **S. LEE.** *Analysis and new designs of digital chaotic ciphers*